# FASCICULE DE BREVET EUROPEEN

(11) **EP 0 820 067 B1**
(45) Date de publication et mention de la délivrance du brevet: **23.01.2002**
(21) Numéro de dépôt: 97401729.5
(22) Date de dépôt: 17.07.1997
(51) Int. Cl.: G21C 9/004

(54) **Système de décharge de vapeur à condenseur interne**
Dampfauslasssystem mit innerem Kondensator
Steam relief system with an internal condenser

(30) Priorité: 19.07.1996 FR 9609099
(43) Date de publication de la demande: 21.01.1998
(73) Titulaire: COMMISSARIAT A L'ENERGIE ATOMIQUE, 75015 Paris (FR)
(72) Inventeur: Aujollet, Patrick, 84120 Pertuis (FR); Gautier, Guy-Marie, 84120 Pertuis (FR)
(74) Mandataire: Ilgart, Jean-Christophe

(56) Documents cités:
- EP-A- 0 475 700
- US-A- 4 428 904
- PATENT ABSTRACTS OF JAPAN vol. 003, no. 148 (M-083), 7 décembre 1979 & JP 54 123689 A (HITACHI LTD), 26 septembre 1979,
- DATABASE WPI Section Ch, Week 8525 Derwent Publications Ltd., London, GB; Class K05, AN 85-151036 XP002025841 & JP 60 085 391 A (HITACHI KK) , 14 mai 1985
- DATABASE WPI Section Ch, Week 8441 Derwent Publications Ltd., London, GB; Class K05, AN 84-252556 XP002025842 & JP 59 151 091 A (TOKYO SHIBAURA DENKI KK) , 29 août 1984
- PATENT ABSTRACTS OF JAPAN vol. 004, no. 023 (M-093), 26 février 1980 & JP 54 162089 A (TOSHIBA CORP), 22 décembre 1979,

## Description

L'invention se rapporte à un système de décharge de vapeur d'un circuit dans une piscine ou un autre réservoir, et ce système comprend avant tout un condenseur interne.

### DOMAINE TECHNIQUE

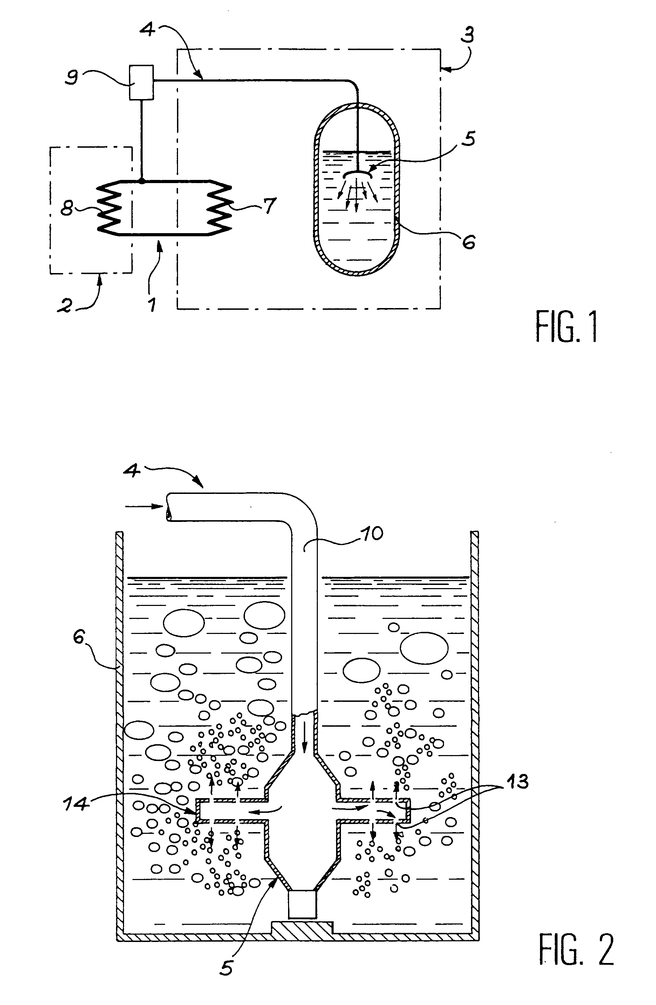

Avant d'intervenir sur un circuit (voir figure 1) primaire 1 de refroidissement dans lequel circule un fluide dit "fluide primaire" sous pression entre une source chaude 2 et une source froide 3, il est nécessaire de réduire la valeur de pression de ce fluide. La réduction de la valeur de pression du fluide primaire s'effectue généralement en diminuant la puissance délivrée par la source chaude 2 au niveau de l'échangeur 8 formé par le circuit primaire 1 de chaleur à l'endroit de cette source chaude 2 et en augmentant la puissance absorbée par la source froide 3.

L'extraction de puissance vers la source froide 3 peut alors s'effectuer à travers des dispositifs échangeurs de chaleur 7 (encore formés par le circuit primaire 1) ou directement par décharge du fluide contenu dans le circuit primaire 1 vers la source froide 3. La décharge du fluide primaire sous pression s'effectue par l'ouverture de la vanne ou des vannes 9 d'un système de décharge 4 branché au circuit primaire 1, et le fluide primaire se déverse alors à travers un diffuseur 5 au bout du système de décharge 4 dans une enceinte ou une piscine 6 de décharge à basse pression.

La présente invention consiste en un dispositif condenseur-diffuseur qui remplace le diffuseur 5 de décharge et qui permet, dans le cas de décharge en phase de vapeur ou en fluide diphasique du réfrigérant circulant dans le circuit primaire 1, de réduire les vibrations et les efforts sur les structures du réservoir de décharge 6.

Pour la simplicité de l'exposé, nous prendrons le cas ou le fluide réfrigérant contenu dans le circuit 1 est un mélange diphasique d'eau à température et à pression élevées qui se décharge dans une piscine 6 à l'air libre remplie d'eau en phase liquide à vingt degrés Celsius.

Nous nous intéresserons plus particulièrement à la décharge du contenu en phase de vapeur du circuit primaire 1.

### ÉTAT DE LA TECHNIQUE

Lorsque le débit de vapeur est peu important, on utilise souvent comme collecteur-diffuseur de décharge un simple tuyau qui débouche sous le niveau libre de la piscine 6 de décharge.

Pour les valeurs de débit de vapeur élevées (plusieurs centaines de Kg/sec.), ce qui est le cas des systèmes de décharge des réacteurs nucléaires à eau bouillante (référence : 8^{e} conférence nucléaire du Bassin du Pacifique à Taipei (Taiwan) du 12 au 16 avril, article "General Electric Advanced Boiling Water Reactors and Plant System Design" par D.R. Wilkins et J. Chang), l'eau contenue dans la piscine 6 de décharge peut être propulsée hors de la piscine 6 par la poussée de la vapeur sous pression. On diminue les risques d'apparition d'un tel phénomène en augmentant la surface de contact entre la vapeur à haute pression et l'eau liquide à basse pression contenue dans la piscine 6 de décharge afin de faciliter les échanges thermiques entre la vapeur émanant du circuit primaire 1 réfrigérant et le liquide contenu dans la bâche ou la piscine 6 de décharge.

La figure 2 donne une représentation du principe d'un tel dispositif : le fluide dit "primaire" sortant en température et en pression élevées du circuit primaire 1 arrive par une tuyauterie principale de décharge 10, appartenant au système de décharge 4, dans le diffuseur 5 d'où il s'écoule vers la piscine 6 de décharge.

Ce dispositif permet de diminuer la résultante des forces d'impulsion du fluide déchargé vers la piscine 6 puisqu'il permet de réduire la vitesse de relâchement du fluide déchargé et de multiplier les directions des jets à travers une multitude d'orifices 13 agencés sur toute la surface de bras 14 rayonnants du diffuseur 5.

Ce dispositif permet également d'obtenir une grande surface de contact entre le fluide primaire qui sort à température et sous pression élevées par les orifices 13 et l'eau de la piscine 6.

Par contre, ce type de dispositif ne permet pas de régler l'expansion et la condensation des innombrables bulles de vapeur dans la piscine 6 de décharge à basse pression.

Les bulles de vapeur sous haute pression grossissent d'abord très rapidement à la sortie des orifices 13 et peuvent alors :
- se regrouper par coalescence et monter rapidement vers la surface libre de la piscine 6, créant ainsi des mouvements ascendants de l'eau de la piscine 6 ;
- en s'éloignant des orifices 13 de décharge, se condenser très brutalement au contact du liquide froid, créant alors des micro-ondes de choc dues à la variation de volume entre la bulle sous forme de vapeur et le volume de liquide correspondant.

Ces phénomènes provoquent des perturbations qui se propagent à travers l'eau de la piscine 6 de décharge vers ses structures (parois et supports).

Il faut ajouter la présence possible d'air dans la tuyauterie principale de décharge 10 et dans le diffuseur 5 avant l'ouverture du système de décharge 4 de vapeur. L'air présent dans les tuyauteries sera fortement comprimé dans la tuyauterie principale 10 et dans le collecteur-diffuseur 5 ; au moment de la décharge, son relâchement dans la piscine 6 de décharge peut provoquer un gonflement important du niveau d'eau, voire un débordement de la piscine 6.

Ce type de dispositif de diffuseur 5 est installé sur les réacteurs à eau bouillante pour les opérations de dépressurisation rapide du circuit primaire 1 ; le domaine de valeurs de pression couvert est de 7 Mpa à moins de 1 Mpa.

Le projet de réacteur nucléaire à eau pressurisée du constructeur américain Westinghouse AP 600 (référence : "AP600 and Advanced Passive 600 Mwe Plant simplified for the 1990s and Beyond", Nuclear Engineering International, Novembre 1988) comporte un dispositif similaire où le domaine de valeurs de pression couvert va de 16 Mpa à moins de 0,5 Mpa. Dans les deux cas, les débits de vapeur peuvent être très élevés, de l'ordre de plusieurs centaines de kilogrammes par seconde.

### PRINCIPE DE L'INVENTION

La présente invention concerne un système de décharge de vapeur comprenant au moins un conduit de condensation interne qui permet de ne relâcher dans la piscine de décharge que du liquide chaud à basse pression.

On évite ainsi tous les phénomènes liés la condensation de jets de vapeur à haute pression dans un réservoir à basse pression, c'est-à-dire les variations de volume induites par l'expansion de la vapeur lorsqu'elle passe de haute pression à basse pression, et les mouvements de fluide créés par la vapeur en se déplaçant dans la piscine de décharge ou par la chasse de l'air contenu dans les tuyauteries au moment de la décharge de vapeur.

Le conduit de condensation interne permet d'aspirer un débit suffisant de liquide froid à basse pression pour condenser la vapeur entrant, avant de relâcher le liquide formé dans la piscine ou plus généralement dans le réservoir. Sous sa forme la plus générale, l'invention est ainsi relative à un système de décharge de vapeur d'un circuit dans une piscine, comprenant un conduit de condensation interne relié au circuit et s'ouvrant dans la piscine, caractérisé en ce qu'il comprend un diaphragme à orifice dans le conduit et un orifice d'alimentation en liquide froid traversant le conduit immédiatement en aval du diaphragme et communiquant avec une bâche d'alimentation en liquide.

La bâche peut être distincte de la piscine ou confondue avec elle, et le conduit immergé dans la piscine ou émergeant d'elle. La piscine peut être tout genre de réservoir clos ou non.

### ÉNUMERATION DES FIGURES

D'autres détails et dispositifs de l'invention seront mieux compris à l'aide de la description détaillée des figures qui suit :
- la figure 1 déjà décrite illustre un circuit primaire et un système de décharge,
- la figure 2 déjà décrite illustre un système de décharge connu,
- la figure 3 illustre en détail un système de décharge à condensation interne appartenant à l'invention,
- les figures 4 et 5 illustrent deux exemples de placement de ce système,
- la figure 6 illustre un autre système de décharge appartenant à l'invention,
- et la figure 7 illustre le système de condensation interne de ce système de décharge.

### DESCRIPTION DETAILLEE D'UN SYSTEME DE CONDENSATION INTERNE

Dans toutes les descriptions qui vont suivre, le sens positif de l'écoulement sera du circuit primaire en pression au réservoir de décharge à basse pression.

Afin de faciliter la compréhension de l'exposé, nous prendrons le cas de la décharge de vapeur d'eau sous haute pression dans une piscine de décharge remplie par de l'eau liquide à basse température ou à température ambiante (de l'ordre de vingt degrés Celsius). Cela ne restreint en rien le domaine d'application de l'invention.

Le conduit de condensation interne 20 conforme à l'invention est représenté isolément à la figure 3 et se compose essentiellement d'un conduit de décharge 16, analogue à la tuyauterie 10 de la réalisation antérieure et occupée comme elle par l'eau, la vapeur ou leur mélange et qui comprend d'amont en aval :
- un diaphragme 21 obstruant une partie de la section du conduit de décharge 16 à l'exception d'un orifice 22 ;
- au moins un orifice 23 d'entrée d'eau froide situé en aval du diaphragme 21 ; cet orifice 23 correspond au débouché d'un conduit d'alimentation 24 en eau froide dans le conduit de décharge 16 ;
- une chambre de mélange 25 délimitée par le conduit de décharge 16 en aval de l'orifice 23 ;
- enfin, un diffuseur 26 en forme d'embouchure conique peut être disposé à la sortie du conduit de décharge 16.

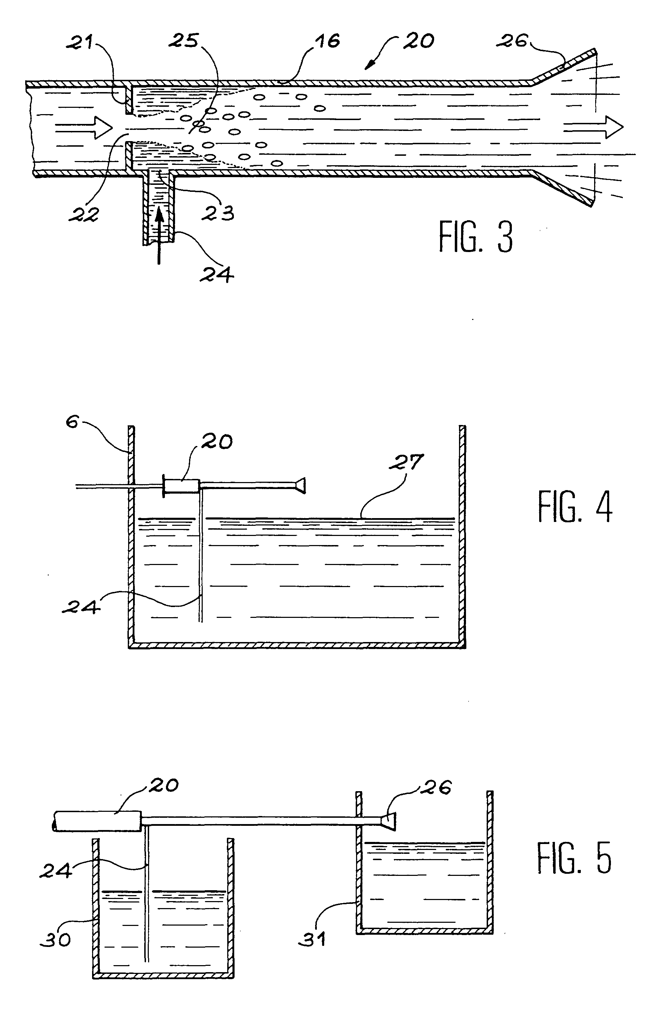

La figure 4 est un exemple d'application de l'invention, qui représente le dispositif de la figure 3 intégré à la piscine de décharge 6, comme précédemment emplie partiellement d'eau. Les conduits sont en général situés au-dessus du niveau d'eau 27 initial de la piscine 6, à l'exception du conduit d'alimentation 24 en eau froide qui plonge au-dessous.

Lors de l'opération de dépressurisation, la vapeur sous pression qui provient du conduit d'alimentation 12 forme un jet de vapeur à travers le diaphragme 21, ce qui crée en aval de celui-ci, autour du jet de vapeur, une zone en forte dépression par rapport au milieu environnant : l'eau de la piscine 6 est aspirée par le conduit d'alimentation 24 et pénètre dans la chambre de mélange 25 pour condenser le jet de vapeur. Il ne s'écoule en sortie de la chambre de mélange 25 que de l'eau chaude.

L'avantage de la disposition de la figure 4, avec le conduit de condensation interne 20 au-dessus du niveau d'eau 27 de la piscine 6, est de permettre la chasse de l'air qui peut être initialement contenu dans les tuyauteries sans dommage pour la piscine 6.

Au fur et à mesure de la décharge de liquide chaud par la tuyauterie de décharge 16, le niveau monte dans la piscine 6 et peut venir recouvrir le conduit de condensation interne 20, qui dans ce cas se trouverait immergé sous le niveau d'eau 27 sans que son fonctionnement ne soit en rien entravé.

### MONTAGE AVEC BACHE ALIMENTAIRE ET PISCINE DE DECHARGE SEPAREE

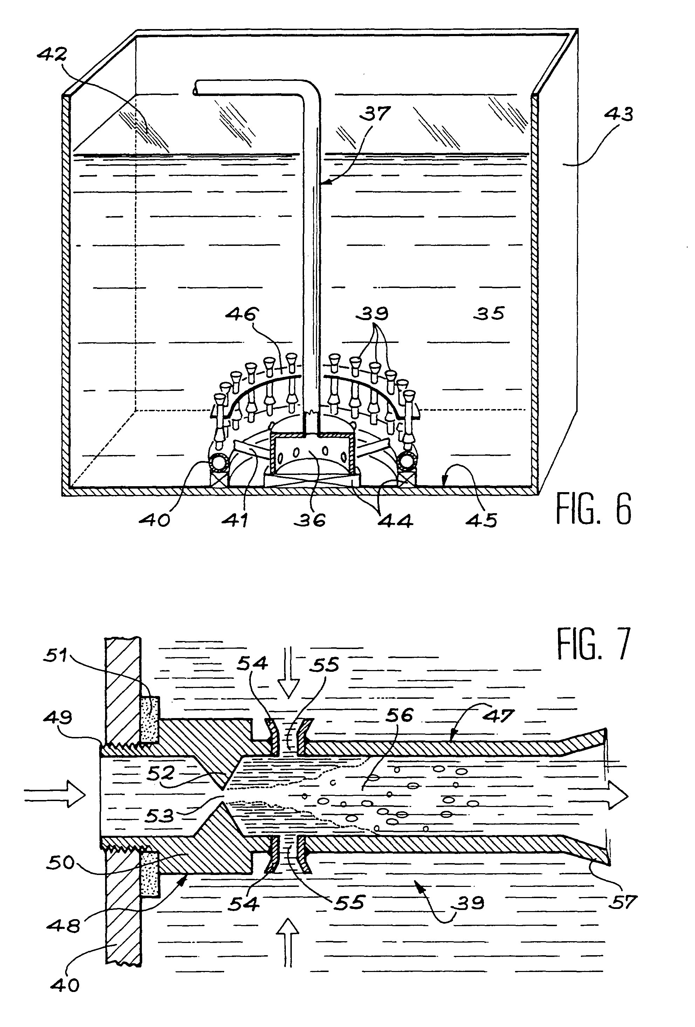

D'autres montages sont possibles : on peut par exemple, comme l'illustre la figure 5, diviser la piscine 6 en une bâche d'alimentation 30 en eau froide et une bâche de décharge 31. Sur la figure 5, la bâche d'alimentation 30 est représentée à titre d'exemple au-dessous du conduit de condensation interne 20, mais elle peut se situer au-dessus de ce conduit. Le conduit de condensation interne 20 pourrait également traverser la bâche d'alimentation 30.

Dans tous les cas, le tuyau d'alimentation 24 plonge dans l'eau de la bâche d'alimentation 30 et l'extrémité du conduit de décharge 16 aboutit dans la bâche de décharge 31.

### MONTAGE DU SYSTEME DE CONDENSATION INTERNE IMMERGE EN PISCINE

L'invention peut être réalisée avec une pluralité de conduits de condensation interne séparés, tous conformes à celui des réalisations précédentes. On peut aussi, comme l'indique la figure 6, utiliser un système de décharge plus compliqué, portant la référence 35, et comprenant un collecteur 36 ayant l'aspect d'une chambre reliée à une ou plusieurs tuyauteries verticales de décharge, portant la référence 37 et à une pluralité de conduits de condensation interne 39 verticaux, s'ouvrant vers le haut, par l'intermédiaire d'un tore de distribution 40 auquel s'embranchent les conduits de condensation interne 39 et des bras 41 rayonnants qui s'étendent jusqu'au collecteur 36.

Le collecteur 36, le tore de distribution 40, les bras 41 et les conduits de condensation interne 39 sont immergés sous le niveau libre 42 de la piscine 43. Comme on le voit à la figure 6, l'ensemble peut reposer sur un pied 44 fixé au fond 45 de la piscine. Ce pied 44 comprend des structures de soutien, séparées ou non, du collecteur 36 et du tore 40 ; il pourrait être remplacé par des structures solidaires de la coque de la piscine qui maintiendraient les mêmes éléménts à une hauteur supérieure.

Les conduits de condensation interne 39 sont maintenus à leur place par le tore de distribution 40 auxquels ils sont fixés, et ils sont rendus solidaires entre eux par une structure métallique 46 antivibratoire de liaison : il s'agit d'une plaque métallique qui les relie.

La structure des conduits 39 de condensation interne et son fonctionnement restent sensiblement les mêmes que pour les réalisations précédentes, comme l'illustre la figure 7 qui donne un exemple de montage de ces systèmes. Chacun d'eux comprend un conduit de décharge 47 se terminant en une embase 48 fixée à l'enveloppe du tore de distribution 40 par un bout fileté 49 ; l'embase 48 comprend encore un élargissement 50 qui permet de presser un joint d'étanchéité 51 contre l'enveloppe du tore 40.

Un diaphragme 52 à orifice 53 semblable au précédent est prévu dans le conduit 47. L'alimentation en eau froide du conduit à condensation interne 39 se fait par un ou plusieurs ajutages 54 soudés à la paroi du conduit de décharge 47 juste en aval du diaphragme 52. Ils créent donc des orifices d'alimentation 55 de l'eau de la piscine 43 à travers le conduit de décharge 47. De nouveau, la vapeur qui traverse le diaphragme 52 est mise en dépression et aspire l'eau froide, qui la condense dans une chambre de mélange 56 délimitée par le conduit de décharge 47.

On retrouve enfin un diffuseur 57 à la sortie du conduit de décharge 47, pour diminuer la vitesse de sortie du liquide qui s'écoule dans la piscine 43. On pourrait encore ajouter un angle coudé en sortie de la chambre de mélange 56 pour orienter le jet dans une direction donnée.

## Revendications

1. Système de décharge de fluide d'un circuit (1) dans une piscine (6; 31; 43), comprenant un conduit de condensation interne (20; 39; 47) relié au circuit (1) et s'ouvrant dans la piscine, **caractérisé en ce qu'**il comprend un diaphragme (21; 52) à orifice (22; 53) dans le conduit et un orifice d'alimentation (23; 55) en liquide froid traversant le conduit immédiatement en aval du diaphragme et communiquant avec une bâche d'alimentation (6; 30; 43) en liquide.

2. Système de décharge selon la revendication 1, **caractérisé en ce que** la bâche d'alimentation est confondue avec la piscine (6; 43), le conduit (20) émergeant du liquide froid qui emplit la piscine (6; 43), un conduit d'alimentation s'étendant (24) entre le liquide froid et l'orifice (23).

3. Système de décharge selon la revendication 1, **caractérisé en ce que** la bâche est confondue avec la piscine (43), le conduit de condensation interne (47) étant immergé dans le liquide froid et l'orifice (55) s'ouvrant dans la piscine par un ajutage (54).

4. Système de décharge selon la revendication 1, **caractérisé en ce que** la bâche d'alimentation (30) est distincte de la piscine (31).

5. Système de décharge selon l'une quelconque des revendications 1 à 4, **caractérisé en ce que** le conduit (20, 47) s'ouvre par un diffuseur (26; 57).

6. Système de décharge selon l'une quelconque des revendications 1 à 5, **caractérisé en ce qu'**une pluralité de conduits (39) à condensation interne est raccordée à un conduit d'alimentation commun (37) par un distributeur (40).

7. Système de décharge selon les revendications 3 et 6, **caractérisé en ce que** le conduit d'alimentation commun (37) s'étend verticalement dans la piscine (43) et est relié au distributeur par une chambre (36) posée sur le fond (45) de la piscine, le distributeur (40) étant aussi posé sur le fond de la piscine et les conduits (39) de condensation interne s'ouvrant vers le haut du distributeur (40).

## Patentansprüche

1. Austrag- bzw. Auslaßsystem für ein Fluid aus einem Kreislauf (1) in ein Becken (6;31;43) mit einer Leitung bzw. einem Rohr (20;39;47) mit interner Kondensation, die bzw. das an den Kreislauf (1) angeschlossen ist und sich zum Becken hin öffnet, **dadurch gekennzeichnet, daß** es in der Leitung eine Membran (21;52) mit einer Öffnung (22;53) sowie eine Zuführöffnung (23;55) für kalte Flüssigkeit aufweist, welche die Leitung unmittelbar stromab von der Membran durchläuft und mit einem Flüssigkeits-Zuführbehälter (6;30;43) in Verbindung steht.

2. Auslaßsystem gemäß Anspruch 1, **dadurch gekennzeichnet, daß** der Zuführbehälter mit dem Becken (6;43) zusammenfällt, wobei die Leitung (20) aus der das Becken (6;43) füllenden kalten Flüssigkeit hervorsteht und eine Zuführleitung (24) zwischen der kalten Flüssigkeit und der Öffnung (23) verläuft.

3. Auslaßsystem gemäß Anspruch 1, **dadurch gekennzeichnet, daß** der Behälter mit dem Becken (43) zusammenfällt, wobei die Leitung (47) mit interner Kondensation in die kalte Flüssigkeit eingetaucht ist und sich die Öffnung (55) über einen Anschlußstutzen (54) zum Becken hin öffnet.

4. Auslaßsystem gemäß Anspruch 1, **dadurch gekennzeichnet, daß** sich der Zuführbehälter (30) von dem Becken (31) unterscheidet.

5. Auslaßsystem gemäß einem der Ansprüche 1 bis 4, **dadurch gekennzeichnet, daß** sich die Leitung (20,47) über einen Diffusor (26;57) öffnet.

6. Auslaßsystem gemäß einem der Ansprüche 1 bis 5, **dadurch gekennzeichnet, daß** mehrere Leitungen (39) mit interner Kondensation über einen Verteiler (40) mit einer gemeinsamen Zuführleitung (37) verbunden sind.

7. Auslaßsystem gemäß den Ansprüchen 3 und 6, **dadurch gekennzeichnet, daß** sich die gemeinsame Zuführleitung (37) in das Becken (43) vertikal erstreckt und mit dem Verteiler über eine am Boden (45) des Beckens angeordnete Kammer (36) verbunden ist, wobei der Verteiler (40) ebenfalls am Boden des Beckens angeordnet ist und sich die Leitungen (39) mit interner Kondensation zur Oberseite des Verteilers (40) hin öffnen.

## Claims

1. System for discharging fluid drom a circuit (1) into a pool (6, 31, 43), comprising an internal condensation conduit (20, 39, 47) connected to said circuit (1) and opening into the pool, **characterized in that** it comprises a diaphragm (21, 52) with an orifice (22, 53) in the conduit and a cold water feed orifice (23, 55) passing through the conduit immediately downstream of the diaphragm and communicating with a liquid feed tank (6, 30, 43).

2. Discharge system according to claim 1, **characterized in that** the feed tank is identical with the pool (6, 43), the conduit (20) emerging from the cold liquid filling the pool (6, 43), a feed conduit (24) extending between the cold liquid and the orifice (23).

3. Discharge system according to claim 1, **characterized in that** the tank is identical with the pool (43), the internal condensation conduit (47) being immersed in the cold liquid and the orifice (55) opening into the pool via a nozzle (54).

4. Discharge system according to claim 1, **characterized in that** the feed tank (30) is separate from the pool (31).

5. Discharge system according to any one of the claims 1 to 4, **characterized in that** the conduit (20, 47) ends in a diffuser (26, 57).

6. Discharge system according to any one of the claims 1 to 5, **characterized in that** a plurality of internal condensation conduits (39) are connected to a common feed conduit (37) by a distributor (40).

7. Discharge system according to claims 3 and 6, **characterized in that** the common feed conduit (37) extends vertically into the pool (43) and is connected to the distributor by a chamber (36) placed on the bottom (45) of the pool, the distributor (40) also being placed on the bottom of the pool and the internal condensation conduits (39) opening towards the top of the distributor (40).
